# EUROPÄISCHE PATENTSCHRIFT

(11) **EP 0 391 209 B1**
(45) Veröffentlichungstag und Bekanntmachung des Hinweises auf die Patenterteilung: **01.06.1994**
(21) Anmeldenummer: 90105781.0
(22) Anmeldetag: 27.03.1990
(51) Int. Cl.: B60G 9/02, B60G 7/02

(54) **Lagervorrichtung zur drehbeweglichen Lagerung eines Pendelkörpers**
Bearing device for a pivot bearing of an oscillating body
Dispositif de palier pour le roulement pivotant d'une structure oscillante

(30) Priorität: 01.04.1989 DE 3910539
(43) Veröffentlichungstag der Anmeldung: 10.10.1990
(73) Patentinhaber: DEERE & COMPANY, Moline, Illinois 61265 (US)
(72) Erfinder: Peiler, Rolf, D-6660 Zweibrücken (DE)
(74) Vertreter: Feldmann, Bernhard

(56) Entgegenhaltungen:
- DD-A- 44 438
- DE-A- 2 717 405
- US-A- 3 448 992

## Beschreibung

Die Erfindung betrifft eine Lagervorrichtung zur drehbeweglichen Lagerung eines als Fahrzeugachse ausgebildeten Pendelkörpers mit einer Lagerwelle in mehreren Lagereinheiten, wobei die Lagerwelle über verformbare Lagerkörper in den Lagereinheiten aufgenommen ist.

Bei einer bekannten Lagerung einer Vorderachse an einem Ackerschlepper (DE-A-2 717 405) ist mittig am Achskörper eine sich in der Längsrichtung des Ackerschleppers erstreckende Lagerwelle vorgesehen, die in Guß- oder Stahllageraugen drehbeweglich aufgenommen ist. Ähnliche Aufhängungen finden sich auch bei Hinterachsen von Mähdreschern, selbstfahrenden Feldhäckslern, Baumwollpflückern und dergl.

Diese Art der Lagerung ist nachteilig, weil die Lagerflächen relativ genau gefertigt und angesichts der auftretenden Reibung ständig geschmiert werden müssen, und weil gegebenenfalls ein Nachspannen der gesamten Lagervorrichtung erforderlich ist.

Sowohl die DD-A-44438 wie auch die US-A-3,448,992 zeigen eine gattungsgemäße Lagervorrichtung für eine Achse mit Lagerkörpern, die in eine äußere Büchse einvulkanisiert bzw. eingeklebt und mit diesen in einer Bohrung eines Rahmens festgelegt sind. Die Lagerkörper sind jeweils vorgespannt und sollen dadurch Schwingungen abbauen.

Diese Lagervorrichtungen sind nachteilig, weil eine Anpassung an räumliche Gegebenheiten, eine Änderung der Vorspannung und eine leichte Montage bzw. Demontage nicht möglich sind.

Die US-A-4,175,806 offenbart eine Aufhängung einer beweglichen Ringöse in zwei starren Rahmenteilen über eine Schraube und eine Vielzahl elastischer und konisch ausgebildeter Gummihülsen. Die Ringöse weist zwei innenkonisch ausgebildete Kammern in X-Anordnung auf und befindet sich mittig zwischen den beiden Rahmenteilen. Die Rahmenteile sind ebenfalls innenkonisch ausgebildet. Die Gummihülsen stützen sich über Hartkunststoffbüchsen auf der Schraube ab und sind außenkonisch ausgebildet. Die Gummibüchsen sind auf der Schraube konzentrisch zu den Kammern in der Ringöse und in den Rahmenteilen angeordnet und in diesen zur Anlage gebracht. Mittels der Schraube und über die Hartkunststoffbüchsen werden die Gummihülsen gegeneinander verspannt.

Diese Aufhängung ist nachteilig, weil die Anpreßkräfte der einzelnen Gummihülsen in den jeweiligen Kammern nicht eindeutig bestimmbar sind, denn ein Anziehen der Schraube wirkt sich stets auf alle beteiligten Gummihülsen aus. Eine Veränderung der auf die Ringöse wirkenden Spannkräfte alleine ist somit nicht möglich; es handelt sich um eine nicht beherrschbare überbestimmte Lagerung. Des weiteren ist die axiale Bewegung der Gummihülsen lediglich durch die radiale Komponente des konischen Sitzes begrenzt.

Die der Erfindung zugrunde liegende Aufgabe wird darin gesehen, eine Lagervorrichtung für einen Pendelkörper, z. B. eine Vorder- oder eine Hinterachse eines Kraftfahrzeuges, vorzuschlagen, die eine Anpassung an räumliche Gegebenheiten, eine Nachspannmöglichkeit und eine einfache Montage erlaubt.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise kann sich der Pendelkörper in geringem Maß gegenüber den Lagereinheiten bewegen, ohne daß an irgendeiner Stelle eine Gleitbewegung auftritt. Schwingungen und Stoßbelastungen werden somit in dem plastisch oder elastisch verformbaren Lagerkörper abgebaut und übertragen sich nicht auf das Fahrgestell. Soweit es die Verformbarkeit des Materials der Lagerkörper zuläßt, findet auch keine Relativbewegung zwischen der Lagerwelle und dem Lagerkörper oder dem Lagerkörper und den Lagereinheiten statt, sondern diese findet durch eine Verformung nur des Lagerkörpers in sich statt.

Demgegenüber kann nach der erfinderischen Lehre der Lagerkörper in die erforderliche Lage gebracht und dort unter die erforderliche Spannung gesetzt werden. Die getrennte Ausbildung des Lagerkörpers und der Lagerschale lassen eine einfache Montage und Demontage zu.

Die Verwendung von verstellbaren Lagerschalen ermöglicht es im Gegensatz zu starren Lagergehäusen, die Lagerkörper zwischen den Lagerschalen und der Lagerwelle vorzuspannen.

Der Pendelkörper kann gegenüber den Lagereinheiten räumlich festgelegt werden, wenn die Lagerschalen und die darin aufgenommenen Lagerkörper an den einander zugelegenen Flächen konisch ausgebildet und axial beweglich sind, weil dann gleichzeitig mit der axialen Verstellung der Lagerschalen auch eine z. T. radial wirkende Verstellung und gleichzeitig eine Erhöhung der Vorspannung der Lagerkörper einhergeht.

Die Anordnung von Spalten um die Kanten der Lagerschalen herum gewährleistet, daß sich die Lagerwelle gegenüber den Lagereinheiten und die Lagerkörper in den Lagereinheiten geringfügig, d. h. um die Amplituden der normalerweise auftretenden Schwingungen bewegen kann, ohne unmittelbar auf die Lagerschalen und die Lagereinheiten zu wirken.

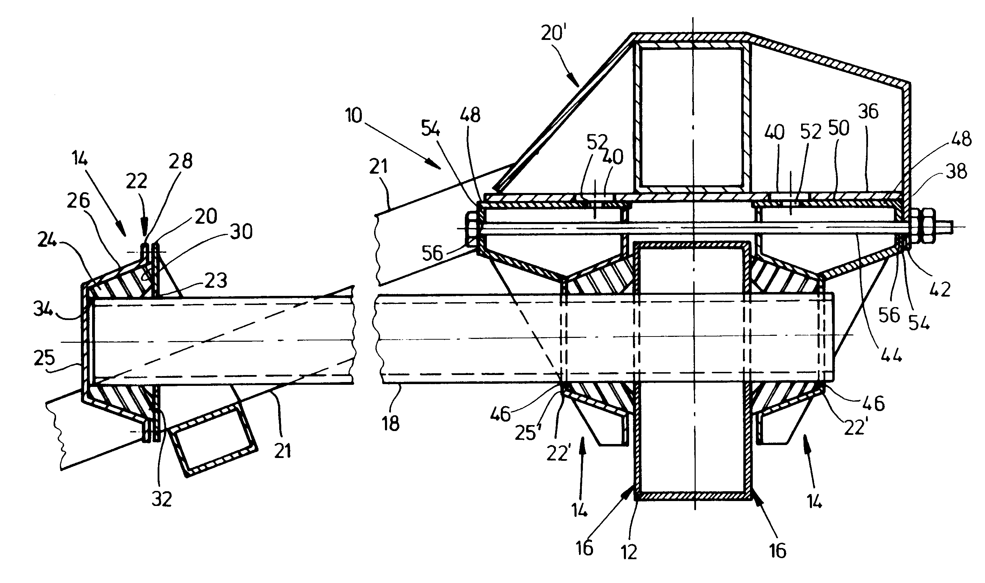

In der Zeichnung ist ein nachfolgend näher beschriebenes Ausführungsbeispiel der Erfindung dargestellt. Die einzige Figur zeigt in Seitenansicht und im Schnitt eine Lagervorrichtung 10 mit einem Pendelkörper 12 und drei Lagereinheiten 14.

Die Lagervorrichtung 10 befindet sich Bereich einer nicht gezeigten Vorderachse eines Ackerschleppers oder einer Hinterachse einer Erntemaschine und ist so ausgebildet, daß der Pendelkörper 12, nämlich die Vorder- bzw. Hinterachse selbst in einer Ebene senkrecht zu der Zeichenebene um einen Winkel von ca. 12 - 20° pendeln kann. Die Lagervorrichtung 10 erstreckt sich symmetrisch oder parallel zu der Längsachse des betreffenden Kraftfahrzeugs und weist in dessen Längsrichtung gesehen die drei Lagereinheiten 14 auf, wobei eine erste und in der Zeichnung links gelegene einen wesentlich größeren Abstand zu den verbleibenden aufweist, als diese zwischen sich.

Der Pendelkörper 12 erstreckt sich quer zu einer durch die Lagereinheiten 14 verlaufenden Mittellinie und ist als Rechteckrohr ausbildet, was aber keineswegs zwingend ist. Senkrecht zu den Seitenflächen 16 des Pendelkörpers 12 und zu dessen beiden Seiten verläuft eine mit diesem starr verbundene Lagerwelle 18, die in den drei Lagereinheiten 14 drehbeweglich aufgenommen ist. Aufgrund der Anordnung der Lagereinheiten 14 wird der Pendelkörper 12 gegen die in ihn eingeleiteten Torsions- und Biegemomente über die Lagerwelle 18 ausreichend abgestützt.

Die Lagereinheiten 14 setzen sich jeweils aus einem Halter 20, 20′, einer Lagerschale 22, 22′ und einem Lagerkörper 24 zusammen.

Der Halter 20, der allein gelegenen Lagereinheit 14 ist als ein Flansch ausgebildet, der starr an einem Fahrwerk 21 befestigt ist und radial zu der Lagerwelle 18 verläuft. In seinem Mittenbereich ist der Halter 20 mit einer Öffnung 23 versehen, deren Durchmesser größer ist als der Außendurchmesser der Lagerwelle 18. In den Randbereich des Halters 20 sind nicht gezeigte Bohrungen eingebracht, die der Aufnahme von nicht dargestellten Schrauben dienen.

Die Lagerschale 22 dieser Lagereinheit 14 ist hutförmig mit einem Deckel 25, einem innenkonisch verlaufenden Wandbereich 26 und einem Flanschteil 28 ausgebildet, der parallel zu dem Halter 20 verläuft. In dem Flanschteil 28 sind ebenfalls nicht gezeigte Bohrungen vorgesehen, die mit denen in dem Halter 20 fluchten und ebenfalls der Aufnahme der Schrauben dienen. Der Innenraum der Lagerschale 22 ist ausreichend groß, um die Lagerwelle 18 mit einem Lagerkörper 24 in sich aufnehmen zu können.

Der Lagerkörper 24 ist aus einem elastischen, nahezu plastisch verformbaren Kunststoff mit guten Reibeigenschaften hergestellt und als hohler Kegelstumpf ausgebildet. Seine axiale Erstreckung ist geringfügig größer als die des Innenraums der Lagerschale 22. Ein Boden 30 des Lagerkörpers 24 ist nicht eben und platt ausgebildet, sondern mit einer anschmiegsamen Lippe 32 versehen. Der äußere Winkel des Kegelstumpfs entspricht dem inneren Winkel des konischen Wandbereichs 26. Der Durchmesser einer durch den Lagerkörper 24 verlaufenden Bohrung 34 ist geringfügig kleiner, als der Außendurchmesser der Lagerwelle 18 in diesem Bereich, so daß der Lagerkörper 24 mit einer Preßpassung auf die Lagerwelle 18 aufgesetzt wird.

Im zusammengebauten Zustand sind die Lagerwelle 18, der Halter 20, die Lagerschale 22 und der Lagerkörper 24 konzentrisch zueinander angeordnet. Der Lagerkörper 24 ist derart in die Lagerschale 22 eingesetzt, daß die Lippe 32 an dem Halter 20 zur Anlage kommen kann.

Der Halter 20′ ist ebenfalls an dem Fahrwerk 21 angebracht und an seiner Unterseite mit einer Gleitplatte 36 versehen, die an ihrem rechts gelegenen Ende mit einer Leiste 38 verbunden ist. In die Gleitplatte 36 sind Langlöcher 40 eingebracht, die sich in der Längsrichtung der Lagerwelle 18 erstrecken. Die Leiste 38 wird ebenfalls von einer Bohrung 42 durchdrungen, die der Aufnahme einer Spannschraube 44 dient.

Die Lagerschale 22′, d. h. die in der Zeichnung links gelegene, ist identisch mit der Lagerschale 22′, die in der Zeichnung rechts gelegen ist. Beide Lagerschalen 22′ weisen wie die Lagerschale 22 einen Deckel 25′, einen innenkonischen Wandbereich 26′ und einen Flanschteil 28′ auf. Der einzige Unterschied besteht darin, daß die Deckel 25′ jeweils mit einer Öffnung 46 versehen sind. Der Durchmesser der vorzugsweise runden Öffnung 46 ist größer als der Außendurchmesser der Lagerwelle 18 und in der Regel identisch mit dem der Öffnung 23.

Zur Befestigung der Lagerschalen 22′ an dem Halter 20′ ist jeweils eine Konsole 48 vorgesehen, die an dem Deckel 25′, und dem Flanschteil 28′ angreift und sich nach oben bis zur Anlage an die Gleitplatte 36 des Kalters 20′ erstreckt. Jede Konsole 48 ist im Querschnitt fünfeckig und liegt mit ihrer Oberseite 50 plan an der Gleitplatte 36 an. In die Oberseite 50 ist mindestens eine Bohrung 52 eingearbeitet, durch die jeweils eine nicht gezeigte Schraube gesteckt werden kann. Senkrecht zu der Oberseite 50 verlaufende Seitenwände 54 der Konsolen 48 sind ebenfalls mit jeweils einer Bohrung 56 versehen. Die Konsolen 48 mit den Lagerschalen 22′ werden zur Montage mit ihrer Oberseite 50 plan an die Gleitplatte 36 angelegt und mittels einer oder mehrerer nicht gezeigter Schrauben an diese angeschraubt.

Die Lagerkörper 24 für die Lagerschalen 22′ sind identisch mit dem für die Lagerschale 22. Insbesondere weisen auch sie die Lippe 32 auf, die dann allerdings an dem Pendelkörper 12 zur Anlage kommt.

Zur Montage der erfindungsgemäßen Lagervorrichtung 10 werden zunächst zwei Lagerkörper 24 auf die Lagerwelle 18 aufgeschoben und bis zu dem Pendelkörper 12 bewegt, bis ihre Lippen 32 an dessen gegenüberliegenden Seiten zur Anlage kommen. Anschließend werden die linke und die rechte Konsole 48 konzentrisch auf die betreffenden Abschnitte der Lagerwelle 18 aufgeschoben, bis sie die Lagerkörper 24 fest umgreifen und so ausgerichtet, daß ihre Oberseiten 50 auch oben gelegen sind. Dann wird der Pendelkörper 12 mit seiner Lagerwelle 18 in eine waagrechte Lage unterhalb der Gleitplatte 36 gebracht und dabei der links gelegene Endbereich der Lagerwelle 18 durch die Öffnung 23 in dem Halter 20 geführt. Der Pendelkörper 12 wird solange angehoben und seitlich bewegt, bis die in der Zeichnung bei diesem Ausführungsbeispiel rechts gelegene Konsole 48 fest an der Innenfläche der Leiste 38 anliegt. Des weiteren werden die beiden Konsolen 48 mittels Schrauben, die durch die Bohrungen 52 und die Langlöcher 40 gesteckt werden, an der Gleitplatte 36 gesichert. In dieser Lage fluchten die Bohrungen 56 in den Seitenwänden 54 der Konsolen 48 und die Bohrung 42 in der Leiste 38 miteinander, so daß die Spannschraube 44 durch diese Bohrungen 42, 56 gesteckt werden kann. Weiterhin wird die links gelegene Konsole 48 und der mit ihr verbundene Lagerkörper 24 mittels der Spannschraube 44 an dem Pendelkörper 12 zur Anlage gebracht, bis kein axiales Spiel mehr vorhanden ist und die Schrauben an der Gleitplatte 36 werden festgezogen.

Schließlich werden auf den links gelegenen und über den Halter 20 hinausragenden Endbereich der Lagerwelle 18 ebenfalls ein Lagerkörper 24 und eine Lagerschale 22 gesteckt. Schließlich wird der Lagerkörper 24 an dem Halter 20 zur Anlage gebracht und die Lagerschale 22 mittels Schrauben an diesem befestigt.

Aufgrund der verschiedenen Abmessungen der Lagerschalen 22, 22′ und der Lagerkörper 24 ist nach beendigtem Zusammenbau gewährleistet, daß zwischen dem Pendelkörper 12 bzw. der Lagerwelle 18 und den Lagerschalen 22, 22′ bzw. dem Halter 20 und den Konsolen 48 stets ein Spalt verbleibt, der eine durch das Material der Lagerkörper 24 mögliche Bewegung des Pendelkörpers 12 in der Lagervorrichtung 10 erlaubt.

Evtl. in den Lagerkörpern 24 auftretende Setzbeträge, die dennoch zu einem Spiel in der Lagervorrichtung 10 führen könnten, werden durch ein Nachspannen der Spannschraube 44 ausgeglichen.

## Patentansprüche

1. Lagervorrichtung (10) zur drehbeweglichen Lagerung eines als Fahrzeugachse ausgebildeten Pendelkörpers (12) mit einer Lagerwelle (18) in mehreren Lagereinheiten (14), wobei die Lagerwelle (18) über verformbare Lagerkörper (24) in den Lagereinheiten (14) aufgenommen ist, dadurch gekennzeichnet, daß mindestens ein Lagerkörper (24) von einer verstellbaren Lagerschale (22, 22') aufgenommen, mit einer Stirnfläche an dem Pendelkörper (12) und/oder der Lagereinheit (14) zur Anlage bringbar und mit Bezug auf die Längsachse der Lagerwelle (18) axial verstellbar ist.

2. Lagervorrichtung nach Anspruch 1, dadurch gekennzeichnet, daß mindestens ein Lagerkörper (24) außen konisch und mindestens eine Lagerschale (22, 22') entsprechend innen konisch ausgebildet ist.

3. Lagervorrichtung nach Anspruch 1 oder 2, dadurch gekennzeichnet, daß die Lagerschalen (22') Öffnungen (46) zur Aufnahme der Lagerwelle (18) aufweisen, wobei zwischen den Öffnungen (46) und der Lagerwelle (18) ein Spalt verbleibt.

4. Lagervorrichtung nach einem oder mehreren der vorherigen Ansprüche, dadurch gekennzeichnet, daß zwischen den Lagerschalen (22') und dem Pendelkörper (12) ein Spalt besteht.

## Claims

1. A bearing device (10) for mounting a swinging body (12) formed as a vehicle axle for rotary movement, with a bearing shaft (18) mounted in a plurality of bearing units (14), wherein the bearing shaft (18) is received in the bearing units (14) by way of deformable bearing bodies (24), characterized in that at least one bearing body (24) is received in an adjustable bearing shell (22, 22'), with an end face which can be brought into abutment with the swinging body (12) and/or the bearing unit (14) and is axially adjustable relative to the longitudinal axis of the bearing shaft (18).

2. A bearing device according to claim 1, characterized in that at least one bearing body (24) has an outwardly conical shape and at least one bearing shell (22, 22') has a correspondingly inwardly conical shape.

3. A bearing device according to claim 1 or 2, characterized in that the bearing shells (22') have openings (46) for reception of the bearing shaft (18), wherein a gap is left between the openings (46) and the bearing shaft (18).

4. A bearing device according to one or more of the preceding claims, characterized in that there is a gap between the bearing shells (22') and the swinging body (12).

## Revendications

1. Ensemble de palier (10) pour le montage en mobilité de rotation d'un corps oscillant (12) qui se présente sous la forme d'un essieu de véhicule et est pourvu d'un arbre de montage (18) reçu dans plusieurs unités de palier (14), l'arbre de montage (18) étant reçu dans les unités de palier (14) par l'intermédiaire de corps de palier déformables (24), **caractérisé** en ce qu'au moins un corps de palier (24) est reçu par une coque de palier ajustable (22, 22'), peut être amené en application, par une face frontale, contre le corps oscillant (12) et/ou l'unité de palier (14), et peut être ajusté axialement par rapport à l'axe longitudinal de l'arbre de montage (18).

2. Ensemble de palier selon la revendication 1, **caractérisé** en ce qu'au moins un corps de palier (24) est réalisé extérieurement conique et au moins une coque de palier (22, 22') est réalisée intérieurement conique de manière correspondante.

3. Ensemble de palier selon la revendication 1 ou 2, **caractérisé** en ce que les coques de palier (22') présentent des ouvertures (46) pour recevoir l'arbre de montage (18), un interstice restant présent entre les ouvertures (46) et l'arbre de montage (18).

4. Ensemble de palier selon l'une quelconque des revendications précédentes, **caractérisé** en ce qu'un interstice est présent entre les coques de palier (22') et le corps oscillant (12).
